Europäisches Patentamt

European Patent Office

Office européen des brevets

(19)

(11) Veröffentlichungsnummer: **0 274 726**
**A2**

## (12) EUROPÄISCHE PATENTANMELDUNG

(21) Anmeldenummer: 87119023.7

(22) Anmeldetag: 22.12.87

(51) Int. Cl.⁴: **F01P 7/16**

(30) Priorität: 10.01.87 DE 3700582

(43) Veröffentlichungstag der Anmeldung:
20.07.88 Patentblatt 88/29

(84) Benannte Vertragsstaaten:
DE ES FR GB IT SE

(71) Anmelder: **BAYERISCHE MOTOREN WERKE AG**
**Postfach 40 02 40 Petuelring 130 - AJ-31**
**D-8000 München 40(DE)**

(72) Erfinder: **Schweiger, Erwin**
**Marienburgerstrasse 12**
**D-8060 Dachau(DE)**

(74) Vertreter: **Bücken, Helmut**
**Bayerische Motoren Werke**
**Aktiengesellschaft Postfach 40 02 40**
**Petuelring 130 - AJ-30**
**D-8000 München 40(DE)**

(54) **Temperatur-Regelvorrichtung für den Kühlkreis flüssigkeitsgekühlter Brennkraftmaschinen.**

(57) Eine Temperatur-Regelvorrichtung für den Kühlkreis flüssigkeits-gekühlter Brennkraftmaschinen enthält einen Kühlmittel-Mischthermostat, dessen Temperaturregler-Einsatz parallel zur Gehäuse-Abstützung seiner Kolbenstange eine zusätzliche Rückstellfeder aufweist, die dem gekühlten Kühlmittel-Anteil aus der Kühlerrücklaufleitung ausgesetzt is und durch eine temperaturabhängige Erhöhung ·ihrer Vorspannung das Kühlerrücklauf-Ventil ab einer vorbestimmten Temperatur des Kühlmittels aus dem Kühler weiter öffnet als dies von der üblichen Dehnstoffkapsel bewirkt wird, die im Mischraum des Thermostat-Gehäuses der Kühlmittel-Mischung aus seinen gekühlten und un-gekühlten Anteilen ausgesetzt ist. Die in ihrer Vorspannung temperaturabhängig veränderliche Stellfeder besteht aus Formgedächtnis-bzw. Memory-Metall.

EP 0 274 726 A2

## Temperatur-Regelvorrichtung für den Kühlkreis flüssigkeits-gekühlter Brennkraftmaschinen.

Die Erfindung betrifft eine Temperatur-Regelvorrichtung mit den Merkmalen nach dem Oberbegriff des Patentanspruches.

Eine bekannte Vorrichtung dieser Bauart nach der DE-PS 33 47 002 weist ein zweites Dehnstoffelement als weiteres Stellelement auf. Dieses erfüllt zwar vollständig die gegebenen Funktions-Anforderungen, ist jedoch relativ bau-und kostenaufwendig.

Aufgabe der Erfindung ist es, eine Temperatur-Regelvorrichtung der bekannten Bauart mit geringerem Bau-und Kostenaufwand bei gleichwertiger Funktion auszubilden.

Durch die Merkmale nach dem Kennzeichen des Patentanspruches wird diese Aufgabe in überraschend einfacher Weise gelöst. Allein die als weiteres temperaturabhängiges Stellelement wirkende Stellfeder übersteuert die Funktion des ersten Stellelementes ab einer bestimmten relativ hohen Temperatur des gekühlten Kühlmittelanteiles aus der Kühlerrücklaufleitung. Dadurch ergibt sich ein Absenken der Regeltemperatur bis auf den Verlauf der Kühlerrücklauf-Temperatur bei offenem Kühlerrücklauf-Ventil und geschlossenem Kurzschluß-Ventil entsprechend der vollen Kühlwirkung des Kühlers.

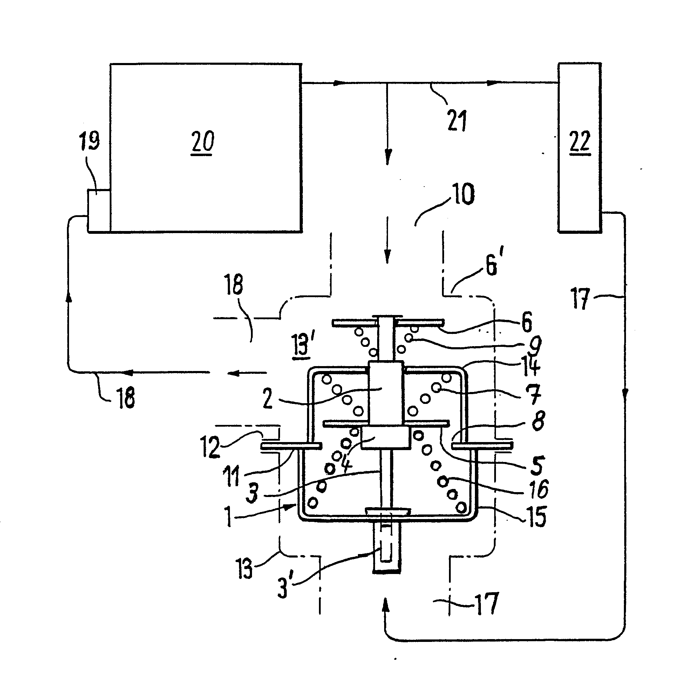

In der Zeichnung ist ein Ausführungsbeispiel der Erfindung dargestellt. Sie zeigt eine erfindungsgemäße Temperatur-Regelvorrichtung als Temperaturregler-Einsatz in einem schematisch dargestellten Kühlkreis einer Brennkraftmaschine.

Ein Temperaturregler-Einsatz 1 weist eine Dehnstoffkapsel 2 mit einer Kolbenstange 3, deren Abstützhülse 3' und eine Dichtkappe 4 auf, die ein Dehnstoffelement mit einer bestimmten Betätigungstemperatur bilden. Die Dehnstoffkapsel 2 trägt je ein Kühlerrücklauf-Ventil 5 und Kurzschluß-Ventil 6. Das Kühlerrücklauf-Ventil 5 ist auf der Dehnstoffkapsel 2 festgelegt und wird mit dieser gemeinsam von einer Rückstellfeder 7 in Richtung zu einem Ventilsitz 8 gedrängt. Am gegnüberliegenden Ende der Dehnstoffkapsel 2 ist das Kurzschluß-Ventil 6 gegen die Wirkung einer weiteren Rückstellfeder 9 axial verschiebbar gelagert, so daß der Hub der Dehnstoffkapsel 2 beim Aufsetzen des Kurzschluß-Ventiles 6 auf seinen Ventilsitz 6' zur Kurzschlußleitung 10 nicht begrenzt ist. Der Ventilsitz 8 ist an einem radialen Befestigungs-und Verschluß-Flansch 11 ausgebildet, der an seinem Umfang in einer Flanschverbindung 12 eines Thermostat-Gehäuses 13 gehalten ist. Über je einen Abstützbügel 14 und 15 stützen sich am Flansch 11 und damit am Thermostat-Gehäuse 13 sowohl die Rückstellfeder 7 als auch eine Stellfeder 16 ab, die aus einem temperaturabhängig die Federstellkraft veränderndem Material, wie Formgedächtnis-bzw. Memory-Metall, besteht. Die Stellfeder 16 erstreckt sich in eine am Thermostat-Gehäuse 13 anschließende Kühlerrücklaufleitung 17, die sich im Gehäuse 13 bis zum Ventilsitz 8 fortsetzt. Die gegenüberliegend in das Gehäuse 13 mündende Kurzschlußleitung 10 endet am Ventilsitz 6' für das Kurzschluß-Ventil 6.

Das Innere des Gehäuses 13 bildet zwischen den Ventilsitzen 6' und 8 einen Mischraum 13' für ungekühlte Kühlmittel-Anteile aus der Kurzschlußleitung 10 und gekühlte Kühlmittel-Anteile aus der Kühlerrücklaufleitung 17. Aus dem Mischraum 13' führt eine Rücklaufleitung 18 zur Kühlmittelpumpe 19 der Maschine 20. Die Kurzschlußleitung 10 und eine Kühlervorlaufleitung 21 zu einem Kühler 22 mit der anschließenden Kühlerrücklaufleitung 17 schließen die beiden parallelen Leitungszweige des Kühlkreislaufes zwischen Maschine 20 und Mischkammer 13'.

Beim Betrieb der Maschine 20 fördert die Kühlmittelpumpe 19 das nach einem Kaltstart zunächst kalte Kühlmittel ausschließlich durch die Kurzschlußleitung 10 bei geöffnetem Kurzschluß-Ventil 6 und geschlossenem Kühlerrücklauf-Ventil 5. Da dabei eine Kühlwirkung des Kühlers 22 ausgeschlossen ist, erreicht die Temperatur des Kühlmittels rasch die Betätigungstemperatur der überwiegend im durchströmten Mischraum 13' angeordneten Dehnstoffkapsel 2. Der darin enthaltene Dehnstoff dehnt sich bei seiner Betätigungstemperatur durch Ändern seines Aggregatzustandes von fest in flüssig in einem geringen Temperaturbereich von z. B. 90 bis 105°C sehr stark. Dadurch wird in diesem Temperaturbereich ein Hub der Dehnstoffkapsel 2 zusammen mit dem Kühlerrücklauf-Ventil 5 und dem Kurzschluß-Ventil 6 erzeugt, der einerseits bei 90°C das Öffnen des Kühlerrücklauf-Ventiles 5 und andererseits bei 105°C das Schließen des Kurzschluß-Ventiles 6 bewirkt. Die Kolbenstange 3 der Dehnstoffkapsel 2 wird dabei durch die Volumenänderung des Dehnstoffes in der Dehnstoffkapsel 2 aus dieser heraus gegen die Wirkung der Rückstellfeder 7 verdrängt und stützt sich in der Abstützhülse 3' und somit gegen den Abstützbügel 15 und das Thermostat-Gehäuse 13 ab. Die erfindungsgemäß in der Kühlerrücklaufleitung 17 bzw. im daran angeschlossenen Teil des Thermostat-Gehäuses 13 angeordnete und der relativ niedrigen Temperatur des ungekühlten Kühlmittel-Anteiles aus der Kühlerrücklaufleitung ausgesetzte Stellfeder 16 bewirkt ein Absenken der Regeltemperatur und damit der Temperatur des über die Kühlmittelpumpe 19 zur Maschine 20 zurückfließenden gesamten Kühlmittels. Dieses Absenken der Regeltemperatur ab dem Beginn des Betätigungs-Temperaturbereiches von z. B. 60 bis 75°C der Stellfeder 16 tritt aufgrund der üblichen Bemessung des Kühlers 22 regelmäßig nur bei hoher Maschinen-Teillast und -Vollast ein. Bei zugleich hoher Umgebungstemperatur wird dieser Temperaturbereich bei entsprechend niedrigerer Maschinen-Teillast erreicht.

Im einzelnen wird durch die Zunahme der Stellkraft der Stellfeder 16 die Dehnstoffkapsel 2 zusammen mit dem Kühlerrücklauf-Ventil 5 und dem Kurzschluß-Ventil 6 im Sinne eines zunehmenden Öffnens des ersten und Schließens des letzteren bewegt. Dadurch ergibt sich ein Abfall der Kühlmitteltemperatur im Mischraum 13' bei gleichzeitigem weiteren Ansteigen der Kühlerrücklauf-Temperatur. Aus diesem Temperaturrückgang folgt ein negativer Hub der Kolbenstange 3 gegenüber der Dehnstoffkapsel 2. Der weiterhin in abnehmendem Anteil aus der Kurzschlußleitung 10 fließende heißere ungekühlte Kühlmittelanteil verhindert dabei durch seinen Einfluß auf die Dehnstoffkapsel 2 zusammen mit der zeitlich verzögerten Umsetzung der Temperaturänderung in der Dehnstoffkapsel 2 eine zu schnelle Schließfunktion dieses ersten Stellelementes gegenüber der gleichzeitigen Öffnungsfunktion der Stellfeder 16. Dadurch wird ein weitgehender Ausgleich der einander entgegengesetzten Hübe erreicht und ein Regelschwingen aufgrund der sich übergreifenden Bereiche der Betätigungstemperaturen beider Stellelemente vermieden. Ein Abstimmen der Betätigungstemperaturen und Regelhübe beider Stellelemente auf den jeweils gegebenen Kühlkreis trägt hierzu bei.

Um ein vorzeitiges Ansprechen der Stellfeder 16 schon vor der Dehnstoffkapsel 1 während des Motorwarmlaufes aufgrund der Erwärmung des in der Kühlerrücklaufleitung 17 innerhalb des Gehäuses 13 stehenden Kühlmittels, damit ein mehrfaches Auf-/Zu-Pendeln des Kühlerrücklauf-Ventiles 5 und einen entsprechend verzögerten Motorwarmlauf zu vermeiden, soll - abweichend von der schematischen Darstellung in der Zeichnung - die Kühlerrücklaufleitung 17 einschließlich ihres Anschlußes am Gehäuse 13 wenigstens annähernd horizontal bis steigend verlaufen, so daß das durch Wärmeleitung erwärmte Kühlmittel durch Konvektion aufsteigend abströmt und ständig durch kälteres Kühlmittel ersetzt wird.

Der durch die Erfindung im Zusammenwirken mit einem Abstimmen des gesamten Kühlkreises erreichbare Verlauf der Kühlmitteltemperatur läßt bei Brennkraftmaschinen einerseits für einen hohen Wirkungsgrad im Teillastbetrieb eine besonders hohe Betriebstemperatur und andererseits für einen gefahrlosen Vollastbetrieb eine niedrigere Betriebstemperatur mit einem äußerst geringen Bauaufwand für die erfindungsgemäße Temperatur-Regelvorrichtung erreichen. Auch ein Austausch eines bisher üblichen Temperaturregler-Einsatzes an Brennkraftmaschinen mit Misch-Thermostat gegen einen erfindungsgemäßen, auf die jeweilige Brennkraftmaschine abgestimmten Temperaturregler-Einsatz, ist in einfachster Weise möglich.

## Ansprüche

Temperatur-Regelvorrichtung für den Kühlkreis flüssigkeits-gekühlter Brennkraftmaschinen, mit einem im wesentlichen in der Kühlmittel-Mischströmung aus gekühlten und ungekühlten Kühlmittel-Anteilen angeordneten Dehnstoffelement als temperaturabhängiges Stellelement (Dehnstoffkapsel 2 und Kolbenstange 3) mit einer Rückstellfeder (7), das die Kühlmittel-Anteile aus einer Kühlerrücklaufleitung (17) und aus einer Kurzschlußleitung (10) mittels eines Ventiles bzw. je eines Ventiles (Kühlerrücklauf-Ventil 5 und Kurzschluß-Ventil 6) gegensinnig steuert, und mit einem weiteren im gekühlten Kühlmittel-Anteil der Kühlmitte-Mischströmung aus der Kühlerrücklaufleitung (17) angeordneten temperaturabhängigen Stellelement (16), das das Ventil bzw. die Ventile (Kühlerrücklauf-Ventil 5 und Kurzschlußventil 6) bei einer niedrigeren Temperatur des Kühlmittel-Anteiles aus der Kühlerrücklaufleitung (17) betätigt als diejenige Temperatur, bei der das in der Kühlmittel-Mischströmung angeordnete Dehnstoffelement (Dehnstoffkapsel 2 und Kolbenstange 3) betätigt wird, dadurch gekennzeichnet, daß das weitere Stellelement als eine temperaturabhängig in seiner Vorspannung veränderliche Stellfeder (Formgedächtnismetall-Schraubenfeder 16) ausgebildet und derart abgestimmt ist, daß diese Stellfeder (16) der Rückstellfeder (7) entgegenwirkt und bei einer Temperatur des gekühlten Kühlmittel-Anteiles über der Betätigungstemperatur der Stellfeder (16) das Ventil bzw. die Ventile (5 und 6) im Sinne einer niedrigeren Kühlmittel-Mischtemperatur betätigt.

0 274 726